(19) Europäisches Patentamt / European Patent Office / Office européen des brevets

(11) **EP 2 406 071 B1**

(12) **EUROPEAN PATENT SPECIFICATION**

(45) Date of publication and mention
of the grant of the patent:
**02.03.2016 Bulletin 2016/09**

(21) Application number: **10707416.3**

(22) Date of filing: **04.03.2010**

(51) Int Cl.:
*B32B 5/12* *(2006.01)*     *B64C 1/12* *(2006.01)*
*B32B 5/26* *(2006.01)*     *B32B 5/28* *(2006.01)*
*B32B 27/04* *(2006.01)*    *B29C 70/20* *(2006.01)*

(86) International application number:
**PCT/US2010/026229**

(87) International publication number:
**WO 2010/104741 (16.09.2010 Gazette 2010/37)**

(54) **COMPOSITE STRUCTURES EMPLOYING QUASI-ISOTROPIC LAMINATES**

QUASI-ISOTROPE LAMINATE EINSETZENDE VERBUNDSTRUKTUREN

STRUCTURES COMPOSITES EMPLOYANT DES STRATIFIÉS QUASI-ISOTROPES

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **10.03.2009  US 401541**

(43) Date of publication of application:
**18.01.2012  Bulletin 2012/03**

(73) Proprietor: **The Boeing Company**
**Chicago, IL 60606-2016 (US)**

(72) Inventors:
• **DAN-JUMBO, Eugene, A.**
**Bothell**
**Washington 98012 (US)**
• **KELLER, Russell, L.**
**Maple Valley**
**Washington 98038 (US)**
• **WESTERMAN, Everett, A.**
**Auburn**
**Washington 98092 (US)**

(74) Representative: **Boult Wade Tennant**
**Verulam Gardens**
**70 Gray's Inn Road**
**London WC1X 8BT (GB)**

(56) References cited:
**US-A- 3 995 080      US-A1- 2006 060 705
US-A1- 2006 243 860**

**Description**

**TECHNICAL FIELD**

This disclosure generally relates to composite structures, and deals more particularly with a fiber reinforced composite laminate exhibiting quasi-isotropic properties useful in arresting the propagation of cracks, especially in unitized composite airframes.

**BACKGROUND**

Airframes for aircraft have typically been made from various types of metals such as aluminum or titanium, or a combination of metals and composites. One advantage of metal airframes is that metal is substantially isotropic and therefore exhibits properties such as modulus which may be substantially the same in all directions.

The trend toward use of lightweight, high strength composite components to build airframes has presented several new problems. One of these problems stems from the anisotropic nature of composite laminates that are reinforced with unidirectional fibers. Due to the tensile strength of the fibers, these laminates may be stronger in the direction of the fibers than in the direction transverse to the fibers. Accordingly, anisotropic composite laminates may transfer loads in a manner different than isotropic materials such as metal.

Because of the anisotropic nature of fiber reinforced laminates, cracks and/or delamination in such laminates may tend to propagate in the direction of the fibers. In the case of a fuselage skin, for example and without limitation, cracks and/or delamination in the laminate may propagate longitudinally unless and until arrested. It may be particularly important to arrest cracks and/or delamination in unitized, all composite bonded airframes which do not rely on mechanical fasteners to join a composite skin to composite reinforcing members such as frames and stiffeners. Accordingly, there is a need for a composite laminate exhibiting at least quasi-isotropic properties which may be advantageously employed in airframes to arrest and/or redirect the propagation of cracks and/or delamination in the laminate.

US 3,995,080 discloses a method of manufacturing strong, lightweight structures for anisotropic loads which have improved resistance to incipient peel.

US 2006/0060705 discloses fuselage sections of an aircraft having panels comprising stiffeners and composite skins.

**SUMMARY**

The present invention provides a method of constructing a composite air frame according to claim 1.

Practicing the method of the present invention produces a composite laminate which is reinforced with unidirectional fibers, yet exhibits quasi-isotropic properties. The quasi-isotropic nature of the laminate derives from the sequence in which the ply orientations are stacked during layup. The orientations of adjacent plies or groups of adjacent plies are selected to provide a desired amount of mismatch of the Poisson's ratio of the adjacent plies. For example, in one embodiment, the difference or mismatch in Poisson's ratio between the adjacent plies may be in range of approximately 15 to 40%. As a result of the quasi-isotropic nature of the laminate caused by the mismatch in Poisson's ratio of adjacent plies, a crack and/or delamination may be arrested by redirecting or turning the crack/delamination. By redirecting the propagation path of the crack/delamination, the progression of the crack/delamination to bond joints in the airframe may be avoided.

According to the method of the present invention, a composite airframe is constructed. The airframe may include at least one stiffener corresponding to a composite frame member and a composite skin joined to the stiffener. The skin includes stacked plies of unidirectional fiber reinforced composite material wherein each of the plies has a fiber orientation. The plies are stacked in a sequence of fiber orientations that alter the propagation of a crack in the skin approaching the stiffener. The stiffener may be a composite laminate, and the skin may be joined to the stiffener by an adhesive bond.

The present invention satisfies the need for a composite laminate having quasi-isotropic properties useful in arresting the propagation of cracks, especially in unitized all composite airframes.

**BRIEF DESCRIPTION OF THE ILLUSTRATIONS**

FIG. 1 is an illustration, in perspective of a unitized all composite airframe employing quasi-isotropic laminates.
FIG. 2 is an illustration of the area designated as "A" in FIG. 1.
FIG. 3 is an illustration of a sectional view taken along the line 3-3 in FIG. 1.
FIG. 4 is an illustration of the area designated as "B" in FIG. 3.

FIG. 5 is an illustration of a sectional view, in perspective, taken along the line 5-5 in FIG. 2.

FIG. 6 is an illustration of a redirected crack resulting in flapping of the skin.

FIG. 7 is an illustration of a perspective view of four groups of composite plies showing a typical layup stacking sequence providing the resulting laminate with quasi-isotropic properties.

FIG. 8 is an illustration of a graph of the difference in Poisson's ratio between adjacent plies as a function of the difference in angular fiber orientation of adjacent plies.

FIG. 9 is an illustration of a flow diagram showing the steps of a method of fabricating a composite structure employing a laminate exhibiting quasi-isotropic properties.

FIG. 10 is an illustration of a flow diagram of aircraft production and service methodology.

FIG. 11 is an illustration of a block diagram of an aircraft.

## DETAILED DESCRIPTION

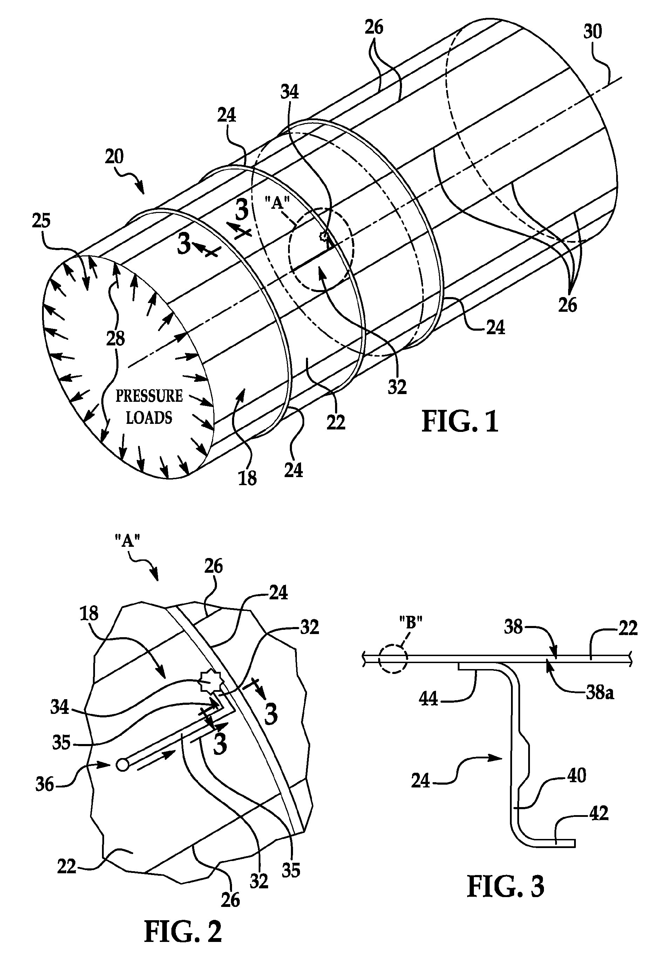

Referring first to FIGS. 1 and 2, the disclosed embodiments generally relate to a quasi-isotropic composite laminate 18 that may be used, for example and without limitation to fabricate components of an airframe 20 of an aircraft (not shown). The airframe 20 may include, without limitation, an outer composite skin 22 joined to generally circular frame members 24 and reinforced by longitudinal stiffeners 26. The frame members 24 are spaced along the longitudinal axis 30 of the airframe 20 and provide reinforcement of the skin 22 in the circumferential direction. The stiffeners 26, sometimes referred to as stringers, are circumferentially spaced around the airframe 20 and function to strengthen the airframe 20, including the skin 22 in the longitudinal direction. The interior 25 of the airframe 20 may be pressurized, resulting in an outward hoop force being exerted on the skin 22, as indicated by the arrow 28.

Referring to FIG. 3, in the illustrated example, the frame members 24 each may be of a one piece, unitary construction fabricated from composite laminates such as carbon fiber epoxy. The frame members 24 comprise inner and outer flanges 42, 44 respectively connected by a web 40. Although the illustrated frame members 24 are formed of composite materials, the frame members 24 may be formed of other materials including metal such as, without limitation, aluminum. Moreover, although not illustrated in the drawings, the frame members 24 may comprise multiple pieces, including, for example and without limitation, a frame component (not shown), a shear clip (not shown) and a tear strap (not shown). The outer flanges 44 of the composite frames 24 may be adhesively bonded to the skin 22. Similarly, the stringers 26 may also be adhesively bonded to the skin 22 resulting in a unitized, substantially all composite bonded airframe 20 that is strong and lightweight.

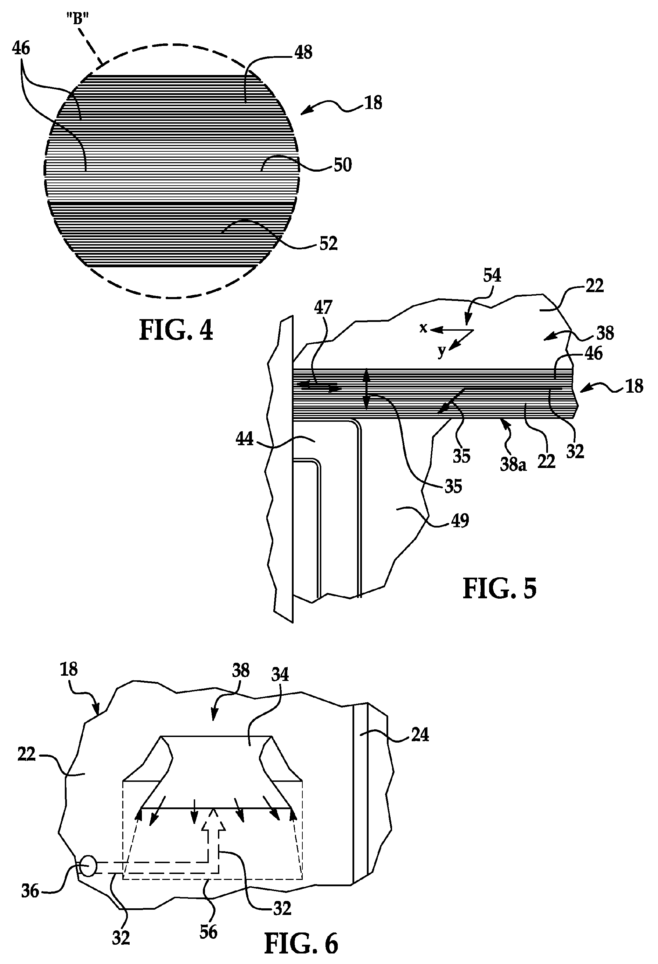

Referring to FIGS. 3 and 4, the skin 22 formed by the quasi-isotropic composite laminate 18 may comprise groups 48, 50, 52 of plies 46 comprising a unidirectional fiber reinforced polymer, such as carbon fiber epoxy. All of the plies 46 in each of the ply groups 48, 50, 52 may have the same fiber orientation. In one exemplary embodiment, ply group 48 may comprise 44 plies 46 having a 0 degree orientation substantially aligned with longitudinal axis 30 (FIG. 1) of the airframe 20, ply group 50 may comprise 44 plies 46 of +45 degree orientation, and ply group 52 may comprise 16 plies 46 having a 90 degree orientation.

The number of plies 46 forming the laminate 18 and their orientations will vary, depending on a variety of factors, including without limitation, the particular application. As will be discussed below in more detail, however, the stacking sequence of the ply orientations is selected in a manner that results in the laminate 18 exhibiting quasi-isotropic properties. The term "isotropic" refers to properties of a material that are substantially identical in all directions. In contrast, "anisotropic" refers to properties of a material such as strength that are dependant upon the direction of an applied load. Individual plies 46 which are reinforced with unidirectional fibers are substantially anisotropic in that the modulus of the ply is greater along the length of the fibers than the modulus in a direction transverse to the direction of the fibers. In contrast to the anisotropic nature of the individual plies 46, the difference between the longitudinal and transverse modulus of the laminate 18 may be substantially reduced using a particular ply orientation stacking sequence. The selected stacking sequence renders the laminate 18 less anisotropic and more nearly isotropic, a condition which is referred to herein as "quasi-isotropic."

The quasi-isotropic nature of the composite laminate 18 may be advantageous in managing cracks in the laminate 18. For ease of description, "crack" and "cracks" as used herein is intended to include a variety of inconsistencies in the laminate 18 that may be beyond design tolerances and which may grow or propagate in size, including, without limitation, separations in the plies 46 and cracks which may extend through more than one of the plies 46.

The management of cracks may include any of several techniques, including arrestment of the crack to prevent its continued propagation and/or guiding or turning the crack as it propagates. The crack may be turned in directions that ultimately result in an arrestment or a controlled release of stress energy that substantially maintains the structural integrity of the skin 22. For example, referring to FIGS. 1, 2 and 5, a crack 32 in the laminate 18 may start at a particular point 36 in the skin 22 due to any of a variety of reasons, and may propagate longitudinally in the direction of the arrows 35 toward one of the frame members 24. Because of the largely anisotropic nature of the individual plies 46, the crack 32 may have a tendency to continue to propagate substantially longitudinally toward and over the frame member 24.

However, due to the quasi-isotropic nature of the composite laminate 18, as the crack 32 approaches the frame member 24, the crack 32 turns or is deflected as shown by the arrow 35 and continues circumferentially until its propagation is finally arrested at 34.

The stress intensity causing the crack 32 to propagate decreases as the tip (not shown) of the crack 32 approaches the frame member 24. This decrease in stress intensity is due to the fact that part of the load is shifted from the skin 22 to the frame member 24. This decrease in stress intensity, which is largely shear, together with reduced stress in the circumferential direction resulting form the presence of the frame member 24, causes the crack to turn and be redirected from the longitudinal to the circumferential direction.

In more severe crack propagation scenarios, after the crack 32 turns and progresses circumferentially as shown at 35, the stress acting on the crack 32 is substantially in an opening or tensile mode 47 (FIG. 5), rather than in a shear mode 49 (FIG. 5), finally resulting in a phenomena referred to as "flapping" which is illustrated in FIG. 6. Flapping is the result of the crack 32 having penetrated upwardly through a number of the plies 46 to the outer surface 38, of the skin 22, causing the plies to partially tear away from the skin 22 and form one or more flaps 34. Flapping of the skin 22 unloads the remaining stresses causing the crack 32 to propagate, thereby arresting the crack 32 from further growth. In some cases, where the stress driving the crack 32 to propagate is particularly high, flapping may occur on both the outside surface 38, and the inside surface 38a (FIGS. 3 and 5) resulting in an opening (not shown) in the skin 22 that allows controlled depressurization of the pressurized space within the airframe 20.

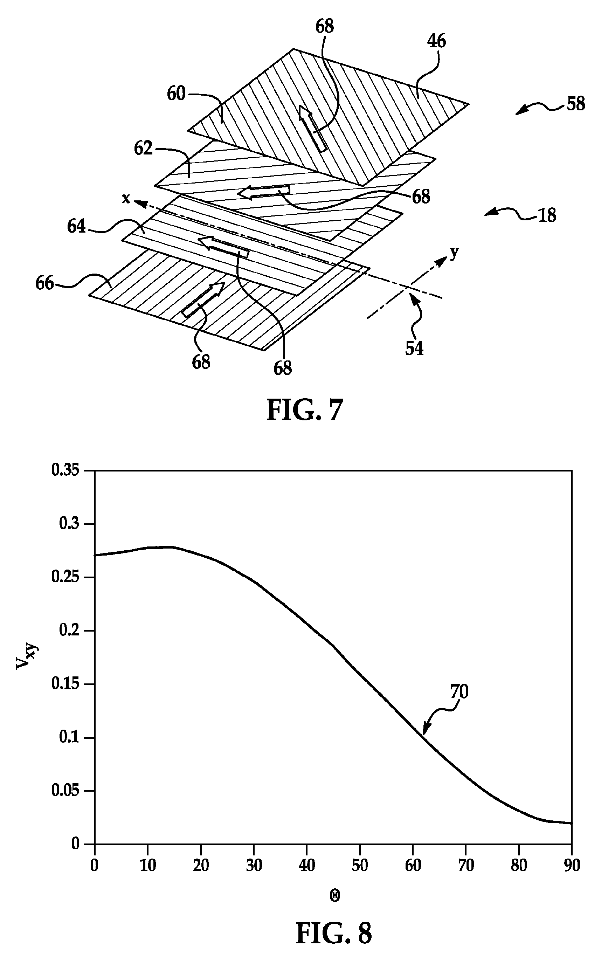

The quasi-isotropic nature of the laminate 18 which facilitates use of various crack arrestment techniques such as that described above, is made possible through the use of a ply orientation stacking sequence, and in this connection, reference is now made to FIG. 7. The laminate 18 is formed by laying up a stack 58 of plies which typically may be arranged in ply groups 60, 62, 64, 66 each containing one or more plies 46 of like orientation. In FIG. 7, the ply orientation, designated by the numeral 68, corresponds to the orientation of the unidirectional reinforcing fibers in the ply 46. In the illustrated example, ply group 66 has a 90 degree orientation in a two dimensional coordinate system 94 of the airframe 20 in which the x-axis is aligned with the longitudinal axis 30 of the airframe 20 (FIG. 1). Ply group 64 has a 0 degree orientation 68. Ply groups 60 and 62 have ply orientations 68 of +45 degrees and -45 degrees, respectively. The ply orientations and the stacking sequence of the ply groups 60, 62, 64, 66 are selected in a manner to result in at least a selected level of mismatch in the Poisson's ratio of adjacent ones of the ply groups 60, 62, 64, 66. For example and without limitation, the difference in Poisson's ratio for ply group 60 may differ from Poisson's ratio for the ply group 62 by at least a pre-selected value representing a mismatch between the two ratios.

Poisson's ratio is the ratio of the relative contraction strain, or transverse strain normal to the applied load, to the relative extension strain, or axial strain in the direction of the applied load. Poisson's ratio may be expressed as:

$$\upsilon = - \ \varepsilon_t \ / \ \varepsilon_1$$

where -

    u = Poisson's ratio
    $\varepsilon_t$ = transverse strain
    $\varepsilon_l$ = longitudinal or axial strain

Strain can be expressed as:

$$\varepsilon = dl/L$$

where -

    dl = change in length
    L = initial length

In the illustrated application, the longitudinal or axial strain is measured in the direction parallel to the x-axis shown in FIG. 7 while the transverse strain is measured in a direction corresponding to the y-axis.

The degree of mismatch in Poisson's ratio required to impart quasi-isotropic properties to the composite laminate 18 will vary widely depending upon, without limitation, the materials used for the plies 46, the number of plies 46 in the stack 58 and the particular application for which the laminate 18 is used. Generally, the amount of mismatch in Poisson's ratio between adjacent plies of differing orientation should be no greater than a minimum value that is effective in aiding in the mechanism chosen to arrest the propagation of a crack, such as crack turning. A mismatch of the Poisson's ratios exceeding this minimum value may not further aid in the crack arrestment and/or may reduce the interlaminar strength between the plies 46 to below minimum specification requirements. In the case of the composite skin 22 for the airframe 20 previously described, adequate crack turning/arrestment may be achieved where the mismatch in the Poisson's ratios of adjacent plies 46 or ply groups 60, 62, 64, 66 is generally within the range of approximately 15 to 40%.

Attention is now directed to FIG. 8 which illustrates a curve 70 for a typical carbon fiber laminate representing the relationship between the Poisson's ratio $V_{xy}$ and the angular difference θ in orientations of two adjacent plies 46 or two groups of plies 46 in which the orientation of the plies 46 are identical for all the plies in the group. Poisson's ratio $V_{xy}$ is the ratio measured in the x-y coordinate system 54 shown in FIGS. 5 and 7. The curve 70 shown in FIG. 8 is plotted for one typical carbon fiber composite material.

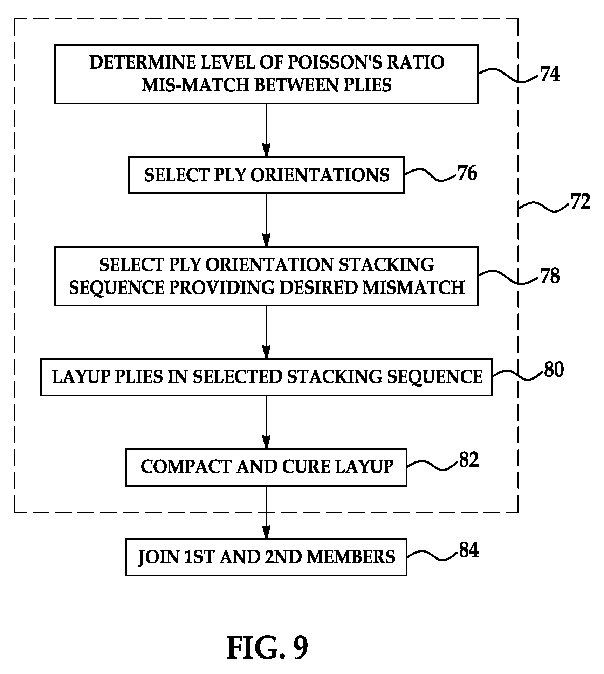

FIG. 9 illustrates the steps of a method of fabricating a composite structure using a quasi-isotropic composite laminate 18 of the type described above. A first composite member such as the laminate skin 22 is formed by a series of steps 72 beginning with determining the level of mismatch of Poisson's ratios between adjacent plies or adjacent groups of plies, as shown at step 74. The particular ply orientations used in the layup are selected at 76 based in part on the level of mismatch determined at 74. Next at 78, a ply orientation stacking sequence is selected which provides the desired amount of mismatch determined at 74. Next at 80, the plies 46 are laid up in the selected stacking sequence, and the layup is then compacted and cured at 82. The first composite member having been fabricated, it is joined to a second composite member at 84 as by adhesive bonding.

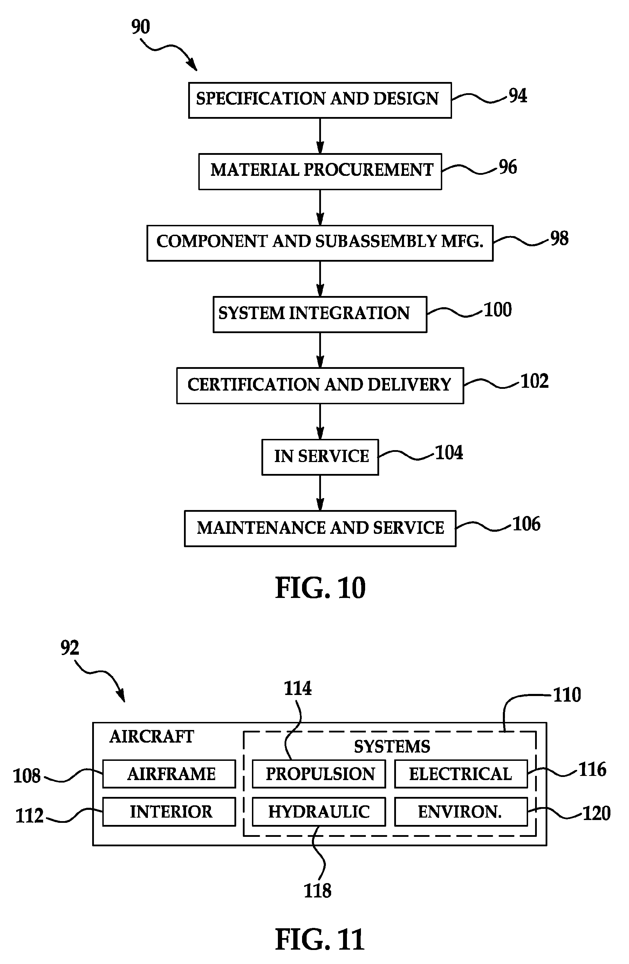

Embodiments of the disclosure may find use in a variety of potential applications, particularly in the transportation industry, including for example, aerospace, marine and automotive applications. Thus, referring now to FIGS. 10 and 11, embodiments of the disclosure may be used in the context of an aircraft manufacturing and service method 90 as shown in Figure 10 and an aircraft 92 as shown in Figure 11. During pre-production, exemplary method 90 may include specification and design 94 of the aircraft 92 and material procurement 96. The disclosed quasi-isotropic laminates may be specified and designed as part of the specification and design 94 of the aircraft 92, and procured as part of the procurement process 96. During production, component and subassembly manufacturing 98 and system integration 100 of the aircraft 92 takes place. The quasi-isotropic laminates disclosed herein may be used to fabricate various components and subassemblies during step 98, which may be then integrated during the system integration step 100. Thereafter, the aircraft 92 may go through certification and delivery 102 in order to be placed in service 106. The quasi-isotropic laminates may be used to achieve certification of the aircraft 92 and/or to satisfy delivery requirements. While in service by a customer, the aircraft 92 is scheduled for routine maintenance and service 106 (which may also include modification, reconfiguration, refurbishment, and so on). The quasi-isotropic laminates may be used while the aircraft 92 is in service 104 to rework areas of the aircraft 92.

Each of the processes of method 90 may be performed or carried out by a system integrator, a third party, and/or an operator (e.g., a customer). For the purposes of this description, a system integrator may include without limitation any number of aircraft manufacturers and major-system subcontractors; a third party may include without limitation any number of vendors, subcontractors, and suppliers; and an operator may be an airline, leasing company, military entity, service organization, and so on.

As shown in FIG. 11, the aircraft 92 produced by exemplary method 90 may include an airframe 108 with a plurality of systems 110 and an interior 112. The quasi-isotropic laminates may be used in various components of the airframe 108. Examples of high-level systems 110 include one or more of a propulsion system 114, an electrical system 116, a hydraulic system 118, and an environmental system 120. Any number of other systems may be included. Although an aerospace example is shown, the principles of the disclosure may be applied to other industries, such as the marine and automotive industries.

Systems and methods embodied herein may be employed during anyone or more of the stages of the production and service method 90. For example, components or subassemblies corresponding to production process 90 may be fabricated or manufactured in a manner similar to components or subassemblies produced while the aircraft 92 is in service.

Also, one or more apparatus embodiments, method embodiments, or a combination thereof may be utilized during the production stages 98 and 100, for example, by substantially expediting assembly of or reducing the cost of an aircraft 92. Similarly, one or more of apparatus embodiments, method embodiments, or a combination thereof may be utilized while the aircraft 92 is in service, for example and without limitation, to maintenance and service 106.

**Claims**

1. A method of constructing a composite airframe (20) having crack arrestment, wherein the composite airframe comprises a composite frame member (24) and a composite skin (22) including a stack of unidirectional fiber reinforced composite plies (46) in a sequence of ply orientations that provide the skin with quasi-isotropic properties, the method comprising:

determining a level of mis-match in the Poisson's ratios between adjacent plies in the stack that will result in the skin exhibiting the quasi-isotropic properties, wherein the Poisson's ratio for each ply is the ratio of the transverse strain normal to an applied load to the axial strain in the direction of the applied load where the axial strain is measured in the direction parallel to the longitudinal axis of the airframe, and the Poisson's ratios differ from each other by an amount in the range of 15 to 40%;
selecting a sequence of ply orientations that will result in the determined level of mis-match in the Poisson's ratios;
fabricating the composite frame member;
fabricating the composite skin, including laying up the stack of unidirectional fiber reinforced composite plies in the sequence of ply orientations that provide the skin with quasi-isotropic properties; and
joining the frame member to the skin.

## Patentansprüche

1.  Verfahren zur Gestaltung eines Verbundwerkstoffflugwerks (20) mit Risshemmung, wobei das Verbundwerkstoffflugwerk ein Verbundwerkstoffrahmenelement (24) und eine Verbundwerkstoffhaut (22) aufweist, die einen Stapel von unidirektional faserverstärkten Verbundwerkstofflagen (46) in einer Abfolge von Orientierungen der Lagen umfasst, durch die die Haut quasi-isotrope Eigenschaften erhält, wobei das Verfahren umfasst:

Bestimmen eines Grades der Nichtübereinstimmung in den Poissonschen Zahlen benachbarter Lagen in dem Stapel, der dazu führt, dass die Haut quasi-isotrope Eigenschaften zeigt, wobei die Poissonsche Zahl einer jeden Lage das Verhältnis der Querdehnung senkrecht zu einer aufgebrachten Last zur axialen Dehnung in Richtung der aufgebrachten Last darstellt, wenn die axiale Dehnung in der zur Längsachse des Flugwerks parallelen Richtung gemessen wird, und wobei die Poissonschen Zahlen im Bereich von 15 bis 40 % voneinander abweichen;
Auswählen einer Abfolge von Lagenorientierungen, die zu dem bestimmten Grad der Nichtübereinstimmung der Poissonschen Zahlen führt;
Herstellen des Verbundwerkstoffrahmenelements;
Herstellen der Verbundwerkstoffhaut, das das Auflegen des Stapels von unidirektional faserverstärkten Verbundwerkstofflagen in der Abfolge von Lagenorientierungen umfasst, durch die die Haut quasi-isotrope Eigenschaften erhält; und Verbinden des Rahmenelements mit der Haut.

## Revendications

1.  Procédé de construction d'une cellule d'avion composite (20) ayant une protection contre les fissures, dans lequel la cellule de composite comprend un élément structurel composite (24) et une peau composite (22) incluant une pile de couches composites unidirectionnelles renforcées de fibres (46) selon une séquence d'orientations de couche qui dote la peau de propriétés quasi isotropes, le procédé consistant à :

déterminer un niveau de décalage dans les coefficients de Poisson entre des couches adjacentes de la pile, en ayant pour résultat que la peau présente les propriétés quasi isotropes, dans lequel le coefficient de Poisson de chaque couche est le rapport de la contrainte transversale perpendiculaire à une charge appliquée à la contrainte axiale dans la direction de la charge appliquée où la contrainte axiale est mesurée dans la direction parallèle à l'axe longitudinal de cellule d'avion, et les coefficients de Poisson diffèrent les uns des autres d'une quantité dans la plage de 15 à 40 % ;
sélectionner une séquence d'orientations de couche qui aura pour résultat le niveau déterminé de décalage dans les coefficients de Poisson ;
fabriquer l'élément structurel composite ;
fabriquer la peau composite, y compris la disposition de la pile de couches composites unidirectionnelles renforcées de fibres selon la séquence d'orientations de couche qui dote la peau de propriétés quasi isotropes ; et
relier l'élément structurel à la peau.

**FIG. 1**

**FIG. 2**

**FIG. 3**

EP 2 406 071 B1

"B"

46            48

                    18

                    50

                    52

**FIG. 4**

54        22

47                38
                  46

x                 18
  y

44                32

35  38a 22 32
    35

49

**FIG. 5**

18        38   34

                    24

22

36

32      56    32   **FIG. 6**

8

**FIG. 7**

**FIG. 8**

```
┌─────────────────────────────────────────────────────────────────┐
│                                                                   │
│   ┌───────────────────────────────────────┐                       │
│   │  DETERMINE LEVEL OF POISSON'S RATIO    │  ⌇⌇ 74                │
│   │  MIS-MATCH BETWEEN PLIES               │                       │
│   └───────────────────────────────────────┘                       │
│                       │                                            │
│                       ▼                                            │
│         ┌─────────────────────────┐                               │
│         │  SELECT PLY ORIENTATIONS │  ⌇⌇ 76                        │
│         └─────────────────────────┘                               │
│                       │                                   ⌇⌇ 72    │
│                       ▼                                            │
│   ┌───────────────────────────────────────┐                       │
│   │  SELECT PLY ORIENTATION STACKING       │  ⌇⌇ 78               │
│   │  SEQUENCE PROVIDING DESIRED MISMATCH   │                       │
│   └───────────────────────────────────────┘                       │
│                       │                                            │
│                       ▼                                            │
│   ┌───────────────────────────────────────┐                       │
│   │  LAYUP PLIES IN SELECTED STACKING      │  ⌇⌇ 80               │
│   │  SEQUENCE                              │                       │
│   └───────────────────────────────────────┘                       │
│                       │                                            │
│                       ▼                                            │
│        ┌────────────────────────┐                                 │
│        │  COMPACT AND CURE LAYUP │  ⌇⌇ 82                         │
│        └────────────────────────┘                                 │
│                       │                                            │
└───────────────────────┼───────────────────────────────────────────┘
                        ▼
         ┌────────────────────────────┐
         │  JOIN 1ST AND 2ND MEMBERS  │  ⌇⌇ 84
         └────────────────────────────┘
```

**FIG. 9**

90

SPECIFICATION AND DESIGN —94

↓

MATERIAL PROCUREMENT —96

↓

COMPONENT AND SUBASSEMBLY MFG. —98

↓

SYSTEM INTEGRATION —100

↓

CERTIFICATION AND DELIVERY —102

↓

IN SERVICE —104

↓

MAINTENANCE AND SERVICE —106

## FIG. 10

92

114     110

| AIRCRAFT | SYSTEMS | |
|---|---|---|
| 108 — AIRFRAME | PROPULSION | ELECTRICAL — 116 |
| 112 — INTERIOR | HYDRAULIC | ENVIRON. — 120 |

118

## FIG. 11

**EP 2 406 071 B1**

**Patent documents cited in the description**

- US 3995080 A
- US 20060060705 A